Europäisches Patentamt

**European Patent Office**

Office européen des brevets

(19)

(11) Veröffentlichungsnummer: **0 271 706**
B1

(12)

# EUROPÄISCHE PATENTSCHRIFT

(45) Veröffentlichungstag der Patentschrift:
03.10.90

(21) Anmeldenummer: 87116472.9

(22) Anmeldetag: 07.11.87

(51) Int. Cl.⁵: **B60S 1/54,** B60H 1/24,
F24F 13/072

(54) Düse für die Belüftung von Scheiben.

(30) Priorität: 18.12.86 DE 3643372

(43) Veröffentlichungstag der Anmeldung:
22.06.88 Patentblatt 88/25

(45) Bekanntmachung des Hinweises auf die Patenterteilung:
03.10.90 Patentblatt 90/40

(84) Benannte Vertragsstaaten:
ES FR GB IT NL

(56) Entgegenhaltungen:
DE-B- 1 010 395
FR-A- 2 238 607
FR-A- 2 505 278

(73) Patentinhaber: AURORA Konrad G. Schulz GmbH & Co,
Südring 4, D-6933 Mudau/Odenwald(DE)

(72) Erfinder: Schulz, Joachim, Neudorfer Strasse 2,
D-8762 Amorbach(DE)
Erfinder: Kern, Alfred, Rippberger Strasse 2,
D-8761 Schneeberg(DE)

(74) Vertreter: Patentanwälte Dipl.-Ing. R. Splanemann Dr. B.
Reitzner Dipl.-Ing. K. Baronetzky, Tal 13,
D-8000 München 2(DE)

ACTORUM AG

## Beschreibung

Die Erfindung betrifft eine schmale Düse für die Belüftung von Scheiben, insbesondere für Windschutzscheiben von Traktoren, Arbeitsmaschinen oder dgl., gemäß dem Oberbegriff von Anspruch 1.

Eine derartige Düse läßt sich vielfältig einsetzen, da die austretende Strömung etwa einem Viertelkreis entspricht. So ist es bekannt, rechts und links unten an der Windschutzscheibe je eine derartige Viertelkreisdüse anzuordnen. Diese Düse baut jedoch vergleichsweise hoch, so daß in diesem Bereich ein Teil der Windschutzscheibe abgedeckt wird. Zudem ist eine die Windschutzscheibe innen abdeckende Düse ästhetisch wenig ansprechend.

Es ist ferner bekannt, in der Mitte am unteren Rand der Windschutzscheibe eine Düse anzuordnen, die etwa 180° abdecken soll. Diese Düse ist jedoch nicht so flexibel in der Anordnung. Wenn beispielsweise ein einziger Scheibenwischer verwendet werden soll, kann eine derartige Düse nicht verwendet werden, da der hierfür erforderliche Platz von dem Scheibenwischermotor eingenommen wird.

Man hat auch versucht, strömungstechnische und ästhetische Vorteile dadurch zu gewinnen, daß parallel zum unteren Rand der Windschutzscheibe eine Blende vorgesehen ist, die die Lamellen der Düse abdecken soll. Eine derartige Düse nimmt aber dann fast den ganzen unteren Rand der Windschutzscheibe ein und ist vergleichsweise unschön. Trotz der aufwendigen Konstruktion ist die Strömungsgeschwindigkeit bei derartigen Düsen in den unteren Ecken der Windschutzscheibe gering.

Ferner sind voll versenkte Düsen bekannt, die aufgrund der besonderen Ausbildung der Lamellen eine erstaunlich große Luftströmung im Bereich der unteren Ecken der Windschutzscheibe aufweisen und somit als 180°-Düsen zu bezeichnen sind.

Unter ungünstigen Betriebszuständen ist es jedoch wünschenswert, noch mehr Luft in diese Bereiche zu führen.

Ein weiteres, bislang nur unbefriedigend gelöstes Problem ist die Zuführung einer ausreichenden Luftmenge zum Durchblickbereich. Bei fast allen Düsen ist nämlich der Durchblickbereich unmittelbar vor den Düsen mit einer ausreichenden Luftmenge beaufschlagbar, hingegen nicht die seitlichen Bereiche. Dies liegt darin begründet, daß sich die Luftströmung in der Regel fächerförmig aufweitet. Ganz besonders wünschenswert wäre es, wenn in dem Durchblickbereich an den Seitenrändern der Windschutzscheibe auch der Durchblickbereich in den entsprechend angrenzenden Seitenscheiben beschlagfrei gehalten werden könnte, da hinter diesen in der Regel Seitenspiegel angebracht sind.

Vielfach werden hierzu dann Zusatzdüsen eingesetzt, oder aber es wird eine Vielzahl sogenannter Fischschwanzdüsen eingesetzt.

Insgesamt sind alle bekannten Maßnahmen vergleichsweise aufwendig und führen zu einem viel zu hohen erforderlichen Luftvolumen, um die gewünschte Wirkung zu erzielen.

Daher ist es Aufgabe der Erfindung, eine Düse gemäß dem Oberbegriff von Anspruch 1 zu schaffen, bei der der Designer hinsichtlich ästhetischer Gesichtspunkte nicht zu sehr eingeengt ist und bei der dennoch eine sehr befriedigende Luftströmungsgeschwindigkeit in seitlichen Ecken der Scheibe erzielbar ist, wenn die Düse von der Ecke entfernt angeordnet ist. Daneben soll die Luftströmung seitlich der Düse im Durchblickbereich besonders stark sein.

Diese Aufgabe wird erfindungsgemäß durch Anspruch 1 gelöst. Vorteilhafte Weiterbildungen ergeben sich aus den Unteranspr chen.

Mit der in Anspruch 1 angegebenen Lösung wird zunächst erreicht, daß die Düse universell einsetzbar ist. Aufgrund der im Verhältnis zu den anderen Lamellen großen Führungsfläche der äußeren Seitenlamelle wird unabhängig vom Anströmwinkel der Düse ein vergleichsweise großer Teil der zur Verfügung stehenden Luft an der äußeren Seitenlamelle entlanggeleitet und steht dort für die Beaufschlagung der äußeren unteren Ecken der Windschutzscheibe zur Verfügung. Die besondere Ausbildung mit teilweiser Versenkung der Lamellen ermöglicht es, sowohl ästhetischen Gesichtspunkten Rechnung zu tragen als auch die Strömung in den kritischen Bereichen auf günstigen Werten zu halten. Hierzu ist es erforderlich, den beanspruchten stumpfen bzw. flachen Winkel, insbesondere im Endbereich der Lamelle, einzuhalten. Überraschenderweise läßt sich in der äußersten unteren Ecke einer Windschutzscheibe mit einer derartigen Anordnung eine vergleichsweise hohe Luftströmung von z.B. 1,7 m pro Sekunde erzielen.

Zu den vorteilhaften Ausgestaltungen, mit denen sich besonders überraschende Vorteile erzielen lassen, gehört die Ausgestaltung gemäß Anspruch 5. Mit dieser Anordnung läßt sich im Bereich der Seitenspiegel eine Strömung erzielen, die erheblich höher ist als die zunächst erwartete. Hierzu ist es wichtig, daß die weiter innen liegende Luftströmung zwischen der inneren und der mittleren Seitenlamelle auf die weiter außen liegende Strömung zwischen der mittleren und der äußeren Seitenlamelle, die gleichmäßiger geführt ist, zu bewegt wird. Dies geschieht mit den beanspruchten Merkmalen.

Mit der bevorzugten Ausbildung der Erfindung gemäß Anspruch 11 läßt sich die Windschutzscheibe eines Traktors, einer Arbeitsmaschine oder eines anderen Fahrzeugs bereits vollständig abdecken.

Bei Bussen und anderen Fahrzeugen mit breiten Windschutzscheiben ist die Ausbildung einer Düsenanordnung günstig, indem die Düsen am unteren Rand einer vergleichsweise breiten Windschutzscheibe in der Mitte angebracht sind, daß mindestens eine weitere Düse am unteren Rand der Windschutzscheibe erheblich außermittig angebracht ist und daß diese nahe des rechten und/oder linken Randes der Windschutzscheibe angeordnete Düse aufgespannte Viertelkreis die an die Windschutzscheibe anschließende Seitenscheibe überstreicht.

Bei einer weiteren, besonders vorteilhaften Ausgestaltung der erfindungsgemäßen Düsenanordnung ist vorgesehen, daß die beiden Düsen in geringem Abstand voneinander angebracht sind, so daß ein Überlappungsbereich der von den Düsen abgegebenen Luftströmung entsteht, der eine erhöhte Luftbeaufschlagung ermöglicht.

Bei einer weiteren, besonders vorteilhaften Ausgestaltung der erfindungsgemäßen Düsenanordnung ist vorgesehen, daß die Düsen so voneinander beabstandet angeordnet sind, daß ein Scheibenwischermotor zwischen ihnen Platz findet.

Bei einer weiteren, besonders vorteilhaften Ausgestaltung der erfindungsgemäßen Düsenanordnung ist vorgesehen, daß die Düsen vollständig symmetrisch ausgebildet sind.

Bei einer weiteren, besonders vorteilhaften Ausgestaltung der erfindungsgemäßen Düsenanordnung ist vorgesehen, daß alle verwendeten Düsen an den gleichen Strömungskanal, insbesondere einen Warmluft-Strömungskanal, angeschlossen sind.

Bei einer weiteren, besonders vorteilhaften Ausgestaltung der erfindungsgemäßen Düsenanordnung ist vorgesehen, daß der Strömungskanal durch Anordnung eines Hohlraumes unmittelbar unterhalb der Windschutzscheibe gebildet ist und daß die Düsen in Durchbrechungen im Karosserieteil oberhalb des Hohlraumes eingesetzt sind.

Bei einer weiteren, besonders vorteilhaften Ausgestaltung der erfindungsgemäßen Düsenanordnung ist vorgesehen, daß die von der Düse aufgespannte Luftaustrittsebene das Karosserieteil, in welchem die Düse befestigt ist (Armaturenbrett), höchstens unwesentlich überragt.

Bei einer weiteren, besonders vorteilhaften Ausgestaltung der erfindungsgemäßen Düsenanordnung ist vorgesehen, daß mindestens zwei Düsen nebeneinander vorgesehen sind und daß die Anordnung der Düsen so gewählt wird, daß eine Überlappung der Luftströmungen stattfindet, die im Durchblickbereich, also etwa in der Höhenmitte der Scheibe, beginnt. Weitere Vorteile, Merkmale und Einzelheiten der Erfindung sind in der nachfolgenden Beschreibung eines Ausführungsbeispiels anhand der Zeichnungen näher erläutert. Es zeigen:

Fig. 1 eine Seitenansicht der Düse im Einbauzustand;
Fig. 2 eine Draufsicht auf die Düse gemäß Fig. 1 und
Fig. 3 eine Stirnansicht der Düse gemäß Fig. 1.

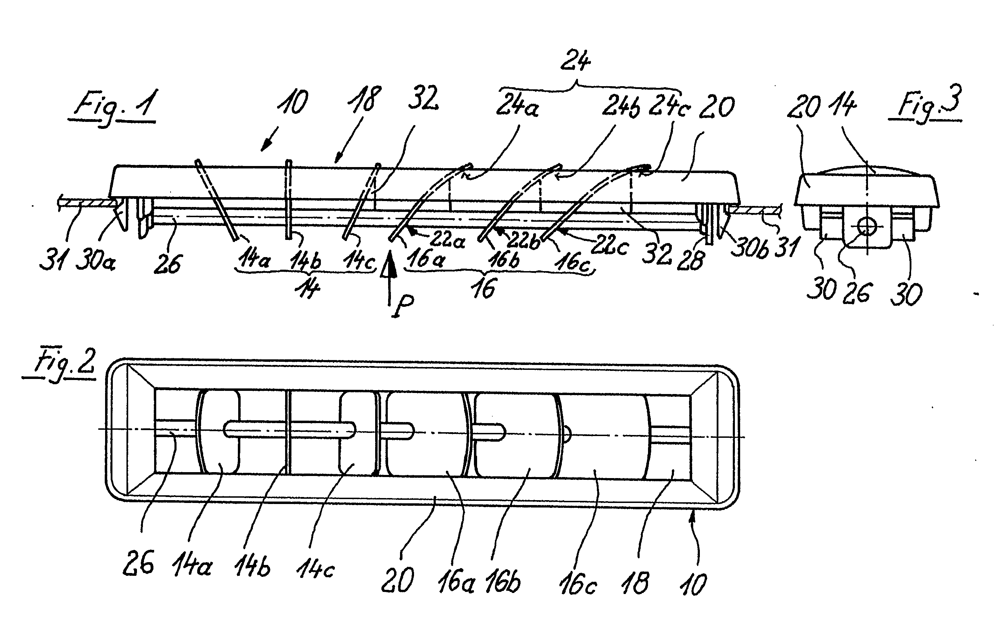

In Fig. 1 ist eine erfindungsgemäße Düse 10 in Seitenansicht dargestellt. Die Düse 10 weist sechs Lamellen auf, von denen drei als Hauptlamellen 14 und drei als Seitenlamellen 16 ausgebildet sind. Die Hauptlamellen 14 unterscheiden sich von den Seitenlamellen 16 dadurch, daß sie einen anderen Winkel gegenüber einer Luftaustrittsebene 18 aufweisen. Die Hauptlamellen dienen zur Beaufschlagung der - nicht dargestellten - Windschutzscheibe im Bereich unmittelbar vor der Düse, während die Seitenlamellen 16 für Bereiche seitlich von der Düse zuständig sind. Wie ersichtlich ist, ragen alle Lamellen 14, 16 nur um weniges, beispielsweise um Bruchteile eines Millimeters oder maximal wenige Millimeter aus der Luftaustrittsebene 18 heraus. Die Lamellen sind in einem Düsenrahmen 20 angeordnet und gemäß Pfeil P mit Warm- und/oder Kaltluft beaufschlagt.

Die Lamellen 14, 16 weisen je unterschiedliche Winkel zur Luftaustrittsebene 18 auf. Die innere Hauptlamelle 14a wiest als einzige Lamelle in die in der Zeichnung links dargestellte Richtung. Die mittlere Hauptlamelle 14b weist senkrecht zur Luftaustrittsebene 18. Die äußere Hauptlamelle 14c weist im gleichen Winkel in die in der Zeichnung rechts dargestellte Richtung, wie die innere Hauptlamelle 14a nach links weist.

Die innere Seitenlamelle 16a weist bereits erheblich stärker in seitliche Bereiche als die äußere Hauptlamelle 14c. Während die Hauptlamellen 14a bis 14c alle gerade ausgebildet sind, sind die Seitenlamellen 16a bis 16c nach außen hin abgebogen, so daß die an ihnen entlanggeführte Luftströmung kurz vor Verlassen des Endbereichs der Lamellen je auch einen Impuls nach außen hin bekommt. Die Seitenlamellen 16a bis 16c weisen je Führungsflächen 22a bis 22c auf, an welchen die Luftströmung entlanggleitet. Während die Neigung der Führungsflächen 22a bis 22c gegenüber der Luftaustrittsebene 18 von innen nach außen kontinuierlich abnimmt, gilt dies nicht für die jeweiligen Endbereiche 24a bis 24c der Lamellen 16.

Der Endbereich 24a der inneren Seitenlamelle 16a ist vergleichsweise stark nach außen abgebogen, während der Bereich 24b der mittleren Seitenlamelle 16b weniger stark nach außen abgebogen ist. Damit entsteht an der Führungsfläche 22b eine im wesentlichen laminare Strömung, die ihre Richtung beim Austritt aus der Düse im wesentlichen beibehält und bei entsprechender Montage der Düse auf einen Bereich gerichtet ist, der dem seitlichen Durchblickbereich bzw. dem Bereich des Seitenspiegels entspricht. Diese Strömung wird verstärkt durch die starke Krümmung des Endbereichs 24a der Lamelle 16a. Hierdurch erhält nämlich der betreffende Einzel-Luftstrom einen starken Impuls nach außen, der die erwähnte Strömung versteift.

Aufgrund der besonderen Ausbildung der äußeren Seitenlamelle 16c ist die Strömungsgeschwindigkeit der Luft im Bereich der unteren Ecken der Seitenscheibe vergleichsweise hoch. Es ist günstig, die Führungsfläche 22c der äußeren Seitenlamelle 16c gegenüber der in Fig. 1 dargestellten Ausbildung zu vergrößern und die Seitenlamelle 16c in einem flacheren Winkel zur Luftaustrittsebene 18 verlaufen zu lassen, als dies in Fig. 1 dargestellt ist. Dadurch wird ein relativ großer Teil der Strömung für die unteren Ecken der Scheibe abgezweigt und so hier eine ausreichende Belüftung erreicht.

Die Lamellen 14, 16 sind in dem in Fig. 1 dargestellten Ausführungsbeispiel auf einer Haltestange 26 angebracht, die ihre Position exakt festlegt. Die Haltestange 26 durchtritt je die Führungsflächen der Lamellen. Vorzugsweise ist sie einstückig mit den Lamellen ausgebildet und in dem Düsenrahmen 20 durch eine Rastverbindung 28 gelagert. Der Düsenrahmen 20 weist seinerseits einstückig angeformte Rastzungen 30a und 30b zur Befestigung in Durchbrechungen in dem entsprechenden Karosserieteil 31 des Fahrzeugs, also etwa am Armaturenbrett, auf. Es ist auch möglich, anstelle der Rastzungen 30a, 30b eine Schraubverbindung vorzusehen.

Der Düsenrahmen 20 liegt satt auf dem Karosserieteil 31 auf und ragt lediglich um wenige Millimeter, beispielsweise um 8 mm, aus diesem heraus. Besonders vorteilhaft ist es, daß die Strömungsführung an den versenkt angeordneten Flächen 22 erfolgt und nur noch die letzte Ausrichtung der Strömung in den Endbereichen 24 oberhalb der Luftaustrittsebene erfolgen muß. In strömungstechnischer Hinsicht ist es günstig, wenn die Endbereiche 24 nicht zu stark gegenüber den Führungsflächen 22 abgebogen sind.

Insgesamt weist die erfindungsgemäße Düse 10 einen vergleichsweise sehr geringen Strömungswiderstand auf.

Mit zur Stabilisierung vorgesehenen Rippen 32 zwischen der Haltestange 26 und den Lamellen wird erreicht, daß trotz geringen Materialaufwandes eine stabile und schlagfeste Ausbildung sowie schwingungsfreie Anordnung der Lamellen sichergestellt ist. Gleichzeitig reduzieren die Rippen 32 und die Lamellen die Neigung zur Bildung von Sekundärwirbeln. Die Lamellen 14, 16 liegen seitlich an dem Düsenrahmen 20 an. Dadurch wird eine zusätzliche seitliche Stabilisierung der Lamellen erreicht. Ferner entsteht durch den Düsenrahmen 20 ein Düseneffekt, der zur Beschleunigung der Strömung beiträgt.

Zur Befestigung am Karosserieteil 31 sind insgesamt vier Rastzungen 30 vorgesehen, von denen in Fig. 3 zwei dargestellt sind. Ferner ist aus Fig. 3 ersichtlich, daß die Lamellen auslaßseitig leicht gerundet sind, was neben ästhetischen weitere strömungstechnische Vorteile bietet und die Verletzungsgefahr reduziert.

Abänderungen der Düse im Rahmen der Erfindung sind möglich. So können eine andere Anzahl von Lamellen gewählt und/oder deren Abmessungen den Bedürfnissen angepaßt werden. Es ist auch möglich, den Düsenrahmen 20 noch weiter zu verkleinern, so daß die Luftaustrittsebene 18 unmittelbar mit dem Karosserieteil abschließt. Ferner wäre es beispielsweise möglich, die äußere Hauptlamelle 14c zu einer Seitenlamelle umzufunktionieren und sie in den Bereich des Seitenspiegels weisen zu lassen. Dabei wäre ihre Ausrichtung etwa entsprechend derjenigen der inneren Seitenlamelle 16a. In diesem Falle wären lediglich 2 Hauptlamellen 14a und 14b vorgesehen, die zweckmäßigerweise jeweils etwas weiter nach außen geneigt wären, als dies in Fig. 1 dargestellt ist.

Die erfindungsgemäße Düsenanordnung könnte auch in Verbindung mit einem Dachlüfter eingesetzt werden. Die Düsen wären dann am oberen Rand der Scheibe angeordnet.

**Patentansprüche**

1. Düse (10) für die Belüftung von Scheiben, insbesondere für Windschutzscheiben, von Traktoren, Arbeitsmaschinen od. dgl., mit einer Mehrzahl von Lamellen (14, 16), die den auf die Scheibe gerichteten Luftstrahl fächerförmig aufweiten und von denen ein die Seitenlamellen (16) umfassender Teil in einen Bereich neben der Düse (10) weist und von denen der andere, die Hauptlamellen (14) umfassende Teil in einen Austrittsbereich vor der Düse weist, so daß das von den Lamellen aufgespannte Belüftungsfeld etwa einem Viertelkreis entspricht, dadurch **gekennzeichnet,** daß die Düse (10) eine langgestreckte Luftaustrittsebene (18) aufweist, daß alle Lamellen (14, 16) teilweise in einem Düsenrahmen (20) versenkt angeordnet sind, daß die Seitenlamellen (16) länger und die äußerste Seitenlamelle (16c) erheblich länger als die Hauptlamellen (14) ausgebildet sind und daß die äußerste Seiten lamelle (16c) luftzuführungsseitig eine gegenüber der Luftaustrittsebene (18) der Düse (10) im stumpfen Winkel angeordnete Führungsfläche (22c) aufweist, die in der Projektion auf die Luftaustrittsebene (18) der Düse (10) einen überproportionalen Anteil an der Gesamtfläche einnimmt.

2. Düse nach Anspruch 1, dadurch gekennzeichnet, daß die äußerste Seitenlamelle (16c) in ihrem Endbereich nach außen abgebogen ist und daß eine im wesentlichen flache Anströmfläche (22c) vor dem Endbereich vorgesehen ist.

3. Düse nach einem der vorhergehenden Ansprüche, dadurch gekennzeichnet, daß zwei, insbesondere drei, Seitenlamellen (16) vorgesehen sind, daß die gegenüber der äußersten Seitenlamelle (16c) weiter innen liegenden Seitenlamellen (16a, 16b) um weniges steiler als die äußerste Seitenlamelle (16c) angeordnet sind und daß diese Seitenlamellen (16a, 16b) Luftführungsflächen (22a, 22b) aufweisen, die aus einem im wesentlichen flachen Teilstück und einem Endbereich (24a, 24b) bestehen, wobei der Endbereich nach außen abgebogen ist und wobei der Grad der Abbiegung geringer als bei der äußersten Seitenlamelle (16c) ist.

4. Düse nach Anspruch 3, dadurch gekennzeichnet, daß drei Seitenlamellen (16) vorgesehen sind, daß der Winkel zwischen den Führungsflächen (22a, 22b) der inneren (16a) und der mittleren Seitenlamelle (16b) größer als der Winkel zwischen den Führungsflächen (22b, 22c) der mittleren (16b) und der äußeren Seitenlamelle (16c) ist, daß der Endbereich der inneren (16a) und der mittleren Seitenlamelle (16b) nahezu parallel ist, so daß die Luftströmung an der inneren Seitenlamelle (16a) stärker nach außen umgelenkt wird als an der mittleren Seitenlamelle (16b).

5. Düse nach Anspruch 4, dadurch gekennzeichnet, daß der Radius der Abbiegung der Endfläche der mittleren Seitenlamelle (16b) größer ist als der jeweilige Radius bei der inneren und der äußeren Seitenlamelle (16a, 16c).

6. Düse nach Anspruch 4 oder 5, dadurch gekennzeichnet, daß je drei Lamellen (14 und 16) vorgesehen sind und daß etwa folgende Winkelverhältnisse gegenüber der von der Düse aufgespannten Luftaustrittsebene (18) vorliegen (in Grad):

|  |  | Anströmfläche | Endbereich |
| --- | --- | --- | --- |
| Innere Hauptlamelle | (14a) | 115 | 115 |
| Mittlere Hauptlamelle | (14b) | 90 | 90 |
| Äußere Hauptlamelle | (14c) | 65 | 65 |
| Innere Seitenlamelle | (16a) | 55 | 28,5 |
| Mittlere Seitenlamelle | (16b) | 40 | 27 |
| Äußere Seitenlamelle | (16c) | 35 | 3 |

7. Düse nach einem der vorhergehenden Ansprüche, dadurch gekennzeichnet, daß die Lamellen (14, 16) auf einer Haltestange (26) angebracht sind, die die Anströmflächen der Lamellen durchtritt, und daß Rippen (32) zur Stabilisierung vorgesehen sind, die sich zwischen der Haltestange (26) und den Anströmflächen der Lamellen stromab der Haltestange (26) erstrecken.

8. Düse nach Anspruch 7, dadurch gekennzeichnet, daß die Haltestange (26) in dem Düsenrahmen (20) rastbar gelagert ist, der nach oben/außen eine glatte Oberfläche aufweist, in der eine im wesentlichen rechteckige Durchbrechung für die Aufnahme der Lamellen vorgesehen ist, die die Luftaustrittsebene der Düse bildet, wobei die Breite der Lamellen so ausgelegt ist, daß sie in der Durchbrechung an dem Düsenrahmen anliegen.

9. Düse nach einem der vorhergehenden Ansprüche, dadurch gekennzeichnet, daß im Bereich der Luftaustrittsebene (18) mehr als die Hälfte der Fläche von den Seitenlamellen (16) abgedeckt wird und daß im Anströmbereich erheblich mehr als die Hälfte der gesamten Anströmfläche von den Seitenlamellen (16) abgedeckt wird.

10. Düse nach einem der vorhergehenden Ansprüche, dadurch gekennzeichnet, daß die Lamellen (14, 16) am Ende leicht abgerundet sind und die Bauhöhe der Düse (10) über alle Lamellen im wesentlichen gleich ist.

11. Düsenanordnung unter Verwendung von Düsen gemäß einem der vorhergehenden Ansprüche, dadurch gekennzeichnet, daß zwei Düsen (10) nebeneinander angeordnet sind und daß die von den Lamellen (14, 16) der Düsen (10) aufgespannten Viertelkreise auseinander weisen.

**Revendications**

1. Buse pour l'aération de vitres, en particulier pour des pare-brise, de tracteurs, de machine de travail ou analogue, comportant une série de lamelles (14, 16) qui élargissent en éventail le jet d'air dirigé sur la vitre, dont une partie, comprenant les lamelles latérales (16), est dirigée vers une zone située à proximité de la buse (10) et dont l'autre partie, comprenant les lamelles principales (14), est dirigée vers une zone de sortie située à l'avant de la buse, de sorte que le champ d'aération couvert par les lamelles corresponde approximativement à un quart de cercle, caractérisée en ce que la buse (10) présente un plan de sortie d'air (18) très allongé, en ce que toutes les lamelles (14, 16) sont disposées de manière à être partiellement noyées dans un cadre de buse (20), en ce que les lamelles latérales (16) sont plus longues, et la lamelle latérale d'extrémité (16c) nettement plus longue que les lamelles principales (14) et en ce que la lamelle latérale d'extrémité (16c) présente, du côté arrivée d'air, une surface de guidage (22c) qui est disposée selon un angle obtus par rapport au plan de sortie d'air (18) de la buse (10), ladite surface de guidage (22c) occupant, en projection sur le plan de sortie d'air (18) de la buse (10), une part plus que proportionnelle de la surface totale.

2. Buse selon la revendication 1, caractérisée en ce que la lamelle latérale d'extrémité (16c) est recourbée vers l'extérieur dans une zone d'extrémité et qu'une surface de soufflage (22c) essentiellement plane est prévue à l'avant de la zone d'extrémité.

3. Buse selon l'une quelconque des revendications précédentes, caractérisée en ce qu'il est prévu deux, plus particulièrement trois lamelles latérales (16), en ce que les lamelles latérales (16a, 16b) situées plus à l'intérieur que la lamelle latérale d'extrémité (16c) sont disposées d'une manière légèrement plus abrupte que ladite lamelle latérale d'extrémité (16c) et que ces lamelles latérales (16a, 16b) présentent des surfaces de guidage d'air (22a, 22b) qui se composent d'un tronçon essentiellement plat et d'une zone d'extrémité (24a, 24b), ladite zone d'extrémité étant recourbée vers l'extérieur et l'ampleur de la courbure étant inférieure à celle de la lamelle latérale d'extrémité (16c).

4. Buse selon la revendication 3, caractérisée en ce qu'il est prévu trois lamelles latérales (16), en ce que l'angle compris entre les surfaces de guidage (22a, 22b) de la lamelle latérale interne (16a) et de la lamelle latérale médiane (16b) est supérieur à l'angle compris entre les surfaces de guidage (22b, 22c) de la lamelle latérale médiane (16b) et de la lamelle latérale externe (16c), en ce que les zones d'extrémité de la lamelle latérale interne (16a) et de la lamelle latérale médiane (16b) sont presque parallèles de sorte que le flux d'air sur la lamelle latérale interne (16a) soit dévié vers l'extérieur de manière plus marquée que sur la lamelle latérale médiane (16b).

5. Buse selon la revendication 4, caractérisée en ce que le rayon de la courbure de la surface d'extrémité de la lamelle latérale médiane (16b) est plus grand que le rayon correspondant des lamelles latérales interne (16a) et externe (16c).

6. Buse selon la revendication 4 ou 5, caractérisée en ce qu'il est prévu respectivement trois lamelles (14 et 16) et en ce qu'on obtient approximativement les rapports angulaires suivants (en degrés) par rapport au plan de sortie d'air (18) couvert par la buse:

|  | | Surface de soufflage | Zone d'extrémité |
|---|---|---|---|
| Lamelle principale interne | (14a) | 115 | 115 |
| Lamelle principale médiane | (14b) | 90 | 90 |
| Lamelle principale externe | (14c) | 65 | 65 |
| Lamelle latérale interne | (16a) | 55 | 28,5 |
| Lamelle latérale médiane | (16b) | 40 | 27 |
| Lamelle latérale externe | (16c) | 35 | 3 |

7. Buse selon l'une quelconque des revendications précédentes, caractérisée en ce que les lamelles (14, 16) sont mises en place sur une barre de maintien (26) qui traverse les surfaces de soufflage des lamelles et en ce qu'il est prévu des renforts (32) de stabilisation qui s'étendent entre la barre de maintien (26) et les surfaces de soufflage des lamelles en aval de la barre de maintien (26).

8. Buse selon la revendication 7, caractérisée en ce que la barre de maintien (26) est montée en blocage dans le cadre de buse (20) qui présente une surface extérieure lisse vers le haut, dans laquelle est prévue une ouverture de forme essentielle carrée pour recevoir les lamelles et qui forme le plan de sortie d'air de la buse, la largeur des lamelles étant dimensionnée de manière telle que lesdites lamelles s'appliquent contre le cadre de buse dans l'ouverture.

9. Buse selon l'une quelconque des revendications précédentes, caractérisée en ce que plus de la moitié de la surface des lamelles latérales (16) est couverte dans la zone du plan de sortie d'air (18) et en ce qu'une part largement supérieure à la moitié de la surface totale de soufflage des lamelles latérales (16) est couverte dans la zone de soufflage.

10. Buse selon l'une quelconque des revendications précédentes, caractérisée en ce que les lamelles (14, 16) sont légèrement arrondies à leur extrémité et en ce que l'encombrement en hauteur de la buse (10) est identique au niveau de toutes les lamelles.

11. Aménagement de buses, utilisant des buses selon l'une quelconque des revendications précédentes, caractérisé en ce que deux buses (10) sont disposées l'une à côté de l'autre et en ce que les quarts de cercle couverts par les lamelles (14, 16) des buses (10) divergent l'un de l'autre.

**Claims**

1. A nozzle (10) for the ventilation of windows, in particular for windscreens, of tractors, operating machinery and the like, having a plurality of laminae (14, 16) which spread out in the manner of a fan an air jet directed on the window and one part of which including lateral laminae (16) is directed into a zone near to the nozzle (10) and the other part of which including the principal laminae (14) is directed into an outlet zone in front of the nozzle, so that the ventilation area spread by the laminae corresponds approximately to a quarter circle characterised in that the nozzle (10) has an elongate air-outlet plane (18), in that all the laminae (14, 16) are arranged partly recessed in a nozzle frame (20), in that the lateral laminae (16) are longer and the outermost lateral lamina (16c) is substantially longer than the principal laminae (14), and in that on the air-intake side the outermost lateral lamina (16c) has a conducting surface (22c) which is disposed at an obtuse angle relative to the air-outlet plane (18) of the nozzle (10) and which, in projection of the air-outlet plane (18) of the nozzle (10), occupies an overproportional part of the total surface.

2. A nozzle according to Claim 1, characterised in that the outermost lateral lamina (16c) is bent outwards in its end zone, and in that a substantially flat inflow surface (22c) is provided upstream of the end zone.

3. A nozzle according to any of the preceding Claims, characterised in that at least two, and in particular three, lateral laminae (16) are provided, in that the lateral laminae (16a, 16b) situated further inwards than the outermost lateral lamina (16c) are arranged slightly more steeply than the outermost lateral lamina (16c), and in that these lateral laminae (16a, 16b) have air-conducting surfaces (22a, 22b) which comprise a substantially flat portion and an end zone (24a, 24b), the end zone being bent outwards and the degree of bending being less than in the outermost lateral lamina (16c).

4. A nozzle according to Claim 3, characterised in that three lateral laminae (16) are provided, in that the angle between the conducting surfaces (22a, 22b) of the inner lateral lamina (16a) and of the central lateral lamina (16b) is greater than the angle between the conducting surfaces (22b, 22c) of the central lateral lamina (16b) and of the outer lateral lamina (16c), in that the end zone of the inner lateral laminae (16a) and of the central lateral lamina (16b) is almost parallel, so that the air flow at the inner lateral lamina (16a) is deflected more powerfully outwards than at the central lateral lamina (16b).

5. A nozzle according to Claim 4, characterised in that the radius of the bending of the end surface of the lateral lamina (16b) is greater than the respective radius at the inner and outer lateral laminae (16a, 16c).

6. A nozzle according to Claim 4 or 5, characterised in that three laminae (14 and 16) are provided in each case, and in that approximately the following angular ratios are present (in degrees) with respect to the air-outlet plane (18) covered by the nozzle:

|  |  | inflow area | end zone |
|---|---|---|---|
| inner principal lamina | (14a) | 115 | 115 |
| central principal lamina | (14b) | 90 | 90 |
| outer principal lamina | (14c) | 65 | 65 |
| inner lateral lamina | (16a) | 55 | 28.5 |
| central lateral lamina | (16b) | 40 | 27 |
| outer lateral lamina | (16c) | 35 | 3 |

7. A nozzle according to any of the preceding Claims, characterised in that the laminae (14, 16) are mounted on a support rod (26) which passes through the inflow surfaces of the laminae, and in that ribs (32) are provided for stabilising purposes, which extend between the support rod (26) and the inflow surfaces of the laminae downstream of the support rod (26).

8. A nozzle according to Claim 7, characterised in that the support rod (26) is mounted so as to be engageable in the nozzle frame (20) which upwardly/outwardly has a smooth surface, in which is provided a substantially rectangular opening which defines the air-outlet plane of the nozzle, the width of the laminae being such that in the opening they abut the nozzle frame.

9. A nozzle according to any of the preceding Claims, characterised in that in the vicinity of the air-outlet plane (18) more than half the surface of the lateral laminae (16) is covered, and in that in the inflow zone considerably more than half the entire inflow surface is covered by the lateral laminae (16).

10. A nozzle according to any of the preceding Claims, characterised in that the laminae (14, 16) are slightly rounded at the end and the overall height (10) is substantially the same over all the laminae.

11. A nozzle assembly using nozzles according to any of the preceding Claims, characterised in that two nozzles (10) are arranged side by side, and in that the quarter circle covered by the laminae (14, 16) of the nozzles (10) point away from one another.

Fig. 1

Fig. 2

Fig. 3